# EUROPÄISCHE PATENTSCHRIFT

(11) **EP 4 001 552 B1**
(45) Veröffentlichungstag und Bekanntmachung des Hinweises auf die Patenterteilung: **06.03.2024**
(21) Anmeldenummer: 20210922.9
(22) Anmeldetag: 01.12.2020
(51) Int. Cl.: E04H 12/34, F42D 3/02, E04G 23/08

(54) **VERFAHREN FÜR DEN RÜCKBAU EINES TURMS**
METHOD FOR DISMANTLING A TOWER
PROCÉDÉ DE DÉMANTÈLEMENT D'UNE TOUR

(30) Priorität: 16.11.2020 DE 102020130232
(43) Veröffentlichungstag der Anmeldung: 25.05.2022
(60) Teilanmeldung: 24152143.4
(73) Patentinhaber: Reisch, Eduard, 82491 Grainau (DE)
(72) Erfinder: Reisch, Eduard, 82491 Grainau (DE)
(74) Vertreter: Mollekopf, Gerd Willi

(56) Entgegenhaltungen:
- CN-A- 1 752 383
- CN-A- 106 839 906
- DD-A7- 301 300
- DE-A1-102019 102 688
- HEINZE ET AL: "4.2.4.3. Sprengen von Industrieschornsteinen", 30 November 1986 (1986-11-30), SPRENGTECHNIK, ANWENDUNGSGEBIETE UND VERFAHREN, DT. VERL. FÜR GRUNDSTOFFINDUSTRIE, LEIPZIG, PAGE(S) 356 - 375, XP009541715, ISBN: 978-3-342-00089-1
- REISCH EDUARD ET AL: "Sprengabbruch des 150 m-Schornsteins der Zucker AG Regensburg "mit Gürtel und Hosenträgern" = Blast folding of a 150 m-Chimney in the sugar refinery Regensburg", SPRENG-INFO, DEUTSCHER SPRENGVERBAND, SIEGEN, DE, vol. 32, no. 3, 30 November 2009 (2009-11-30), pages 19-22, XP009541695, ISSN: 0941-4584

## Beschreibung

### Gebiet der Erfindung

Die vorliegende Erfindung betrifft ein Verfahren für den Rückbau eines Turms, insbesondere den Rückbau eines Betonturms.

### Hintergrund der Erfindung

Oft müssen Bauwerke industrieller Anlagen nach Ablauf der geplanten betrieblichen Nutzungszeit abgebaut oder abgerissen werden und das Grundstück, auf dem die Anlage erbaut worden ist, muss in seinen ursprünglichen Zustand zurück versetzt werden. Zu den abzubauenden industriellen Bauwerken zählen beispielsweise Türme, wie beispielsweise die von Windenergieanlagen.

Beim Rückbau von Windenergieanlagen werden zunächst Stern, Nabe, Getriebe und Maschinenhaus am oberen Ende des Turms durch Einsatz eines Kranes entfernt. Der zurückbleibende Turm kann dann in unterschiedlichen Verfahren entweder in Bruchstücken oder segmentweise, weiter durch Einsatz des Kranes sowie der Zuhilfenahme von Spezialmaschinen, abgetragen werden. Der Nachteil dieser Verfahren ist der erhebliche Zeitaufwand und die hohen Kosten aufgrund der Stand- und Einsatzkosten des Kranes sowie der Spezialmaschinen, die zum Abtragen des Turms notwendig sind.

Als eine Alternative erfolgt der Rückbau von Windenergieanlagen durch Sprengverfahren. Dabei werden Sprengkörper an geeigneter Stelle am Fuß des Turms in den Baukörper eingebracht. Die Zündung der Sprengkörper resultiert dann in einem Umkippen des Turms in eine definierte Richtung. Dabei ist unter Einbeziehen eines Sicherheitsfaktors in Längsrichtung eine Aufpralllänge des 1,2 fachen der Höhe des Turms zu berücksichtigen. Die dafür notwendige freie Fläche ist in der Praxis oft nicht gegeben. Das Fallen der Türme, abgerissen nach solchen Verfahren, ist ungenau, birgt damit Sicherheitsrisiken, und resultiert, aufgrund der hohen Fallhöhe und der damit verbundenen hohen Energiefreisetzung beim Fallen des Turms, in einem tiefen Eindringen in das Erdreich. Die entstandenen Flurschäden müssen beseitigt werden, was ebenso finanzielle und zeitliche Ressourcen erfordert.

Das Dokument CN 106 839 906 A bezieht sich auf ein Verfahren für das Abbrechen eines Turms und beschreibt das Verwenden von Dämpfungselementen und einer Dämpfungsgrube, um Aufprallerschütterungen zu reduzieren.

Das Dokument DD 301 300 A7 befasst sich mit einem Verfahren zu segmentierten Sprengung hoher Bauwerke, wobei durch Anordnung mehrerer Sprengebenen im Bauwerk mehrerer Fallöffnungen geschaffen werden, so dass diese als Knickpunkte wirken und die Fallrichtung bestimmen.

Es ist wünschenswert, ein Verfahren zu schaffen, dass das Rückbauen eines Betonturms, insbesondere eines Turms einer Windenergieanlage, unter geringerem zeitlichem Aufwand und unter geringerem Platz- und Kostenbedarf ermöglicht.

### Zusammenfassung der Erfindung

Dementsprechend ist eine Aufgabe der vorliegenden Erfindung, die vorab genannten Nachteile zumindest teilweise zu vermeiden oder zu verringern. Diese Aufgabe wird mit Hilfe der Merkmale der unabhängigen Ansprüche gelöst. In den abhängigen Ansprüchen sind bevorzugte Ausführungsformen der Erfindung beschrieben.

Die Erfindung ist in den Ansprüchen 1 und 10 angegeben. Bevorzugte Ausführungsformen sind Gegenstand der abhängigen Ansprüche.

Gemäß einem Aspekt der vorliegenden Erfindung wird ein Verfahren für den Rückbau eines Turms bereitgestellt. Der Turm weist eine Wandung auf. Das Verfahren weist das Ausbilden auf einer ersten Ebene des Turms von ersten Fallschlitzen auf, die eine erste Fallrichtung definieren, wobei zwischen den ersten Fallschlitzen mindestens ein in der ersten Fallrichtung liegendes und zu sprengendes erstes Vorderbein verbleibt, und wobei des Weiteren mindestens ein erstes Hinterbein verbleibt. Des Weiteren weist das 80116EP.B1D PAe Kahler Käck Mollekopf

Verfahren das Ausbilden auf mindestens einer zweiten Ebene des Turms von zweiten Fallschlitzen auf, die eine zweite Fallrichtung definieren, wobei zwischen den zweiten Fallschlitzen mindestens ein in der zweiten Fallrichtung liegendes und zu sprengendes zweites Vorderbein verbleibt, und wobei mindestens ein zweites Hinterbein verbleibt. Die erste und zweite Ebene unterscheiden sich dabei in ihren Positionen in axialer Richtung des Turms. Die genannten Fallrichtungen definieren eine Kippfigur des Turms.

Ein derartiges Verfahren ermöglicht kosten-, platz- und zeitsparend den Rückbau eines Turms. Ein vollständiger Abriss der Turms in Bruchstücken oder segmentweise, durch Einsatz des Kranes sowie der Zuhilfenahme von Spezialmaschinen, kann mit dem Verfahren vermieden werden. Aufgrund des Ausbildens der Fallschlitze auf der zweiten Ebene und der sich daraus ergebenden Kippfigur wird die gesamt-Aufpralllänge des Turms deutlich reduziert. Des Weiteren geht, beispielsweise falls die Kippfigur einer Faltung entspricht, ein Teil der Energie auf die kollidierenden Abschnitte über, sobald obere Teile des Turms auf untere Teile des Turms treffen. Als Folge reduziert sich die Erschütterung der Umwelt, welche bei Sprengverfahren gering zu halten ist. Durch die Kollision der gefalteten Abschnitte des Turms werden diese Teile bereits vorzerkleinert und dringen weniger tief in den Boden ein. Der zeitliche Aufwand für den Rückbau der entstandenen Flurschäden und die Beseitigung der Trümmer reduziert sich maßgeblich.

Eine Kippfigur ist die Figur, die sich ergibt, wenn durch Sprengung der Vorderbeine auf der jeweiligen Ebene Turmabschnitte über das bzw. die Hinterbeine in Fallrichtung kippen. Beispielsweise können die erste Fallrichtung und die zweite Fallrichtung entgegengesetzt sein, so dass die Kippfigur eine Faltung ist. Durch Auswahl der Fallrichtungen durch entsprechendes setzen der Fallschlitze können auch andere Kippfiguren erzielt werden. Eine Faltung hat den Vorteil, dass dadurch die Fläche verringert werden kann, auf die der Turm fällt (Aufprallfläche).

Die Fallschlitze werden in einer Ausführungsform in Form von komplett durchgängigen Ausschnitten, beispielsweise in Form einer Öffnung, in die Wandung des Turms eingebracht. Es werden dadurch komplette Wandbereiche entfernt bzw. ausgeschnitten. Ebenso kann der Querschnitt des Turms auf jeder Ebene weiter durch nicht durchgängige Ausschnitte geschwächt werden, z.B. um mehrere Hinterbeine auszubilden. Zwischen den jeweiligen Ausschnitten zurückbleibende Abschnitte der Wand beschreiben die genannten Beine auf der ersten Ebene bzw. zweiten Ebene.

Die Fallschlitze sind vorzugsweise so geformt, das sich bei Sprengung der Vorderbeine des Turms auf einer Ebene ein Kippen in die Richtung der Vorderbeine, das heißt in die Fallrichtung, ergibt. Der Turm kippt dabei über die Hinterbeine. Die Form der Fallschlitze reicht daher vorzugsweise bis unter den Schwerpunkt des Turms.

Die Anzahl der Beine auf jeder Ebene kann variieren und ist abhängig von der Anzahl der eingebrachten Fallschlitze und der Anzahl weiterer eingebrachter schwächender Ausschnitte. So ergeben sich in speziellen Ausführungsformen des Verfahrens je ein Hinter- und ein Vorderbein pro Ebene, zwei Hinterbeine und ein Vorderbein pro Ebene, ein Hinterbein und zwei Vorderbeine pro Ebene oder drei Vorderbeine und drei Hinterbeine pro Ebene.

Im Falle, von drei Beinen pro Ebene sind diese bevorzugt an Positionen in Umfangsrichtung des Turmes angeordnet, die etwa 120 ° voneinander beabstandet sind. Im Falle, von sechs Beinen pro Ebene sind diese bevorzugt an Positionen angeordnet, die etwa 60 ° in Umfangsrichtung voneinander beabstandet sind.

Der Turm kann einen länglichen Hohlkörper zylindrischer, konischer oder unterkonischer Form aufweisen. Beispiele solcher Türme umfassen Schornsteine, Kühltürme, Masten, Gleitkerne oder Türme von Windenergieanlagen. Eine bevorzugte Wandstärke der Wandung kann dabei im Bereich von etwa 30 cm liegen.

Bei einer Ausführungsform weist das Verfahren des Weiteren das Ausbilden entsprechende Fallschlitze auf mindestens einer weiteren Ebene auf. Entsprechende Fallschlitze können z. B. auf zwei, drei, vier, fünf oder mehr in axialer Richtung unterschiedlich angeordneter Ebenen ausgebildet werden. So können, abhängig von der Höhe des Turms und des Freiraums für den Niedergang des Turms eine entsprechende Anzahl an Ebenen mit Fallschlitzen in axialer Richtung des Turms vorgesehen werden. Beispielsweise können drei Ebenen ab einer Höhe des Turms von etwa 120 m oder vier Ebenen ab einer Höhe des Turms von etwa 200 m vorgesehen sein.

Bei einer bevorzugten Ausführungsform ist der Turm der Turm einer Windenergieanlage. Es sind unterschiedliche Turmarten von Windenergieanlagen bekannt. Die Art des Turms hängt dabei vom Anlagetyp, von der Nabenhöhe und der Stärke des Windes ab. Insbesondere kann das Verfahren mit Betontürmen und Hybridtürmen verwendet werden. Betontürme werden aus Stahlbeton gebaut und werden oft am Standort selbst gebaut, können aber auch aus vorgefertigten Segmenten als Spannbetonturm zusammengesetzt werden. Hybridtürme bestehen aus zwei Teilen. Der Unterteil eines Hybrid-Turms besteht aus Stahlbeton, der obere aus Stahl. Der Turm ist vorzugsweise ein Spannbetonturm.

In einer Ausführungsform des Verfahrens sind mindestens bereits eines oder eine Kombination der Elemente aus der Gruppe mindestens bestehend aus Stern, Nabe, Getriebe und Maschinenhaus vom Turm entfernt worden. Dazu kann beispielsweise ein Kran verwendet werden.

In einer weiteren Ausführungsform des Verfahrens weist der Turm stabilisierende Elemente auf, die vertikal in der Wandung des Turms verlaufen. Die stabilisierenden Elemente umfassen beispielsweise eine Bewehrung, insbesondere bei einem Bauwerk aus Stahlbeton. Die stabilisierenden Elemente umfassen beispielsweise auch gespannte Stahleinlagen aus Spannstahl, insbesondere bei einem Bauwerk aus Spannbeton.

In einer bevorzugten Ausführungsform sind die stabilisierenden Elemente Spannglieder, die zum Beispiel an deren Enden eingespannt sind und eine Zugspannung in vertikaler Richtung auf die Wandung des Turms ausüben. Zwischen den Enden kann das jeweilige Spannglied vom Beton entkoppelt sein (d.h. die Wandung kann durch Spannbeton ohne Verbund ausgebildet sein).

Vorzugsweise sind die Spannelemente im Turm mit einem Spannverfahren ohne Verbund eingebracht, so dass sich die Spannelemente zwischen den Ankerstellen, an denen ihre Enden eingespannt sind, zum Beton relativ verschieben können. Beispielsweise verlaufen die vorgespannten Spannelemente in Hüllrohren; sie können mit Fett umhüllt sein. Wird ein solches von der Wandung des Turms entkoppeltes Spannglied durchtrennt, so ist es über seine gesamte Länge unwirksam.

In einer Ausführungsform werden die Fallschlitze so eingebracht, dass mindestens ein erstes Vorderbein in Umfangsrichtung des Turms derart angeordnet ist, dass mindestens einige der vertikal verlaufenden stabilisierenden Elemente, die durch das mindestens eine zweite Hinterbein verlaufen, auch durch das mindestens eine erste Vorderbein verlaufen, und dass das mindestens eine zweite Vorderbein in Umfangsrichtung des Turms derart angeordnet ist, dass mindestens einige der vertikal verlaufenden stabilisierenden Elemente, die durch das mindestens eine erste Hinterbein verlaufen, auch durch das mindestens eine zweite Vorderbein verlaufen. Bei einer derartigen Einbringung der Fallschlitze ist sichergestellt, dass der Turm auch bei Vorhandensein der Fallschlitze noch stabil ist. Insbesondere kann sichergestellt werden, dass zumindest einige der stabilisierenden Elemente intakt bleiben und somit die Spannung in der Wandung des Turms aufrechterhalten wird.

In einer Ausführungsform weist das Verfahren das Vorsehen von mindestens zwei, vorzugsweise drei Hinterbeinen auf jeder Ebene auf. Die Hinterbeine einer Ebene sind dadurch voneinander abgegrenzt, dass eine Ausnehmung in der Wandung zwischen den Hinterbeinen vorgesehen ist oder dass zwischen den Hinterbeinen angeordnete stabilisierende Element durchtrennt sind, wobei mindestens ein durch jedes Hinterbein einer Ebene verlaufendes stabilisierendes Element auf der oder den anderen Ebenen nicht durchtrennt ist, und insbesondere durch ein in der bzw. den anderen Ebenen angeordnetes Vorderbein oder Hinterbein verläuft. Dadurch wird der Turm auch im Bereich der Hinterbeine der jeweiligen Ebene vorgeschwächt, wobei die Standfestigkeit erhalten bleibt.

In einer Ausführungsform des Verfahrens werden die Beine auf einer Ebene derart ausgebildet, dass sämtliche durch die Hinterbeine verlaufende stabilisierende Elemente auch durch ein oder mehrere Vorderbeine auf einer anderen Ebene verlaufen.

In einer besonderen Ausführungsform des Verfahrens weist das Ausbilden der Fallschlitze das Durchtrennen der stabilisierenden Elemente im Bereich der Fallschlitze auf.

In einer Ausführungsform des Verfahrens, werden die Fallschlitze derart ausgebildet, dass für jedes Hinterbein auf der einen Ebene mindestens ein Vorderbein auf der anderen Ebene vorgesehen ist. Das Vorderbein ist derart angeordnet, dass mindestens ein durch das Hinterbein verlaufendes stabilisierendes Element auch durch das entsprechende Vorderbein auf der anderen Ebene verläuft. Pro Ebene sind vorzugweise zwei oder drei Hinterbeine vorgesehen. Werden auf mehr als zwei Ebenen des Turms Vorder- und Hinterbeine ausgebildet, sind diese bevorzugt jeweils entgegengesetzt ausgerichtet. Stabilisierende Elemente verlaufen abwechselnd durch die Hinterbeine und die Vorderbeine benachbarter Ebenen.

Vorzugsweise werden die Fallschlitze auf mindestens der ersten und zweiten Ebene so eingebracht, dass die Anzahl der Vorderbeine und die Anzahl Hinterbeine auf mindestens der ersten und der zweiten Ebene gleich sind, sie können aber auch unterschiedlich sein.

In einer Ausführungsform weist das Verfahren das unwirksam Machen von mindestens einigen der vertikal verlaufenden stabilisierenden Elemente auf. Dieses Vorschwächen ermöglicht, dass der Sprengstoff optimal wirken kann und der Turm kontrolliert fällt. Die Standsicherheit des Turms, die beispielsweise gefährdet ist durch Gewichts- und Windlasten, kann aber gewährleistet werden.

Das Verfahren kann das unwirksam Machen der stabilisierenden Elemente, die die Standsicherheit des Turms nicht gefährden (z.B. zwischen den Vorder-/Hinterbeinen), vor der Sprengung der Vorderbeine umfassen. Das Verfahren kann alternativ oder zusätzlich das unwirksam Machen der stabilisierenden Elemente, die die Standsicherheit des Turms aufrechterhalten, parallel (insbesondere im Wesentlichen synchron) zur Sprengung der Vorderbeine umfassen.

Die stabilisierenden Elemente können zunächst freigelegt werden. Dies erfolgt beispielsweise durch nicht durchgängige oder durchgängige Ausschnitte an der Wandung des Turms. Dies kann ferner durch Bohrungen erfolgen.

In einer Ausführungsform des Verfahrens bleiben die stabilisierenden Elemente auch in den Bereichen, in denen Fallschlitze eingebracht werden, erhalten.

Das Durchtrennen der stabilisierenden Elemente, bevorzugt solcher, die die Standsicherheit des Turms nicht gefährden, kann ebenso durch einen Schnitt, bevorzugt durch einen Sägeschnitt erfolgen.

In einer Ausführungsform weist das Verfahren ferner das unwirksam Machen von mindestens einigen der stabilisierenden Elemente durch das Anbringen im Bereich der stabilisierenden Elemente von Schneidladungen und dem Zünden der Schneidladungen auf. Die Schneidladungen werden besonders bevorzugt zum Trennen der stabilisierenden Elemente, die durch die Hinterbeine verlaufen, verwendet. Dies ist eine Bauart von Sprengsatz mit besonders hoher und gezielt gerichteter Durchschlagskraft, die verwendet wird, um die stabilisierenden Elemente zu durchtrennen. Bevorzugt erfolgt dies parallel zur Sprengung der Vorderbeine.

In einer Ausführungsform weist das Verfahren des Weiteren das Sprengen des mindestens einen ersten Vorderbeines und des mindestens einen zweiten Vorderbeines auf, um den Turm zum Einsturz zu bringen. Durch das Sprengen des mindestens einen ersten Vorderbeines und des mindestens einen zweiten Vorderbeins bilden sich ein erstes und ein zweites Sprengmaul. Das durch Sprengen der Vorderbeine eingeleitete Kippen in die pro Ebene durch die Fallschlitze definierte Fallrichtung führt zu einem Kippen der Abschnitte des Turms, die durch die Positionen der Ebenen an dem Turm definiert sind, über die Hinterbeine jeder Ebene in Richtung der Vorderbeine derselben Ebene.

In einer Ausführungsform des Verfahrens erfolgt das Zünden der Schneidladungen zeitlich parallel mit dem Sprengen der Vorderbeine. Insbesondere kann das Zünden der Schneidladungen synchron oder aber in einem Zeitfenster von 10 Sekunden, bevorzugt in einem Zeitfenster von zwei Sekunden oder einer Sekunde, vor oder nach der Sprengung der Vorderbeine erfolgen.

In einer Ausführungsform des Verfahrens befindet sich die erste Ebene im Bereich eines Turmfußes oberhalb eines Fundaments des Turms. Die zweite Ebene befindet sich oberhalb der ersten Ebene, vorzugsweise in einer unteren Hälfte des Turms, besonders bevorzugt in einem Bereich um ein Drittel der Höhe des Turms über dem Fundament.

In einer besonderen Ausführung des Verfahrens sind durch das Ausbilden der ersten und der zweiten Fallschlitze die erste bzw. zweite Fallrichtung derart bestimmt, dass die sich bei Sprengung der zu sprengenden Vorderbeine ergebende Kippfigur eine Faltung beschreibt, wobei diejenigen Abschnitte des Turms, die durch die Positionen der Ebenen definiert sind, übereinander gefaltet werden. Eine derartige Anordnung der Fallschlitze kann die benötigte Aufprallfläche reduzieren.

Beispielsweise ist die Anordnung der Fallschlitze und ggf. der vorgeschwächten Bereiche in der Wandung des Turms auf der ersten Ebene, um 180 ° um die Längsachse des Turms gegenüber der Anordnung der Fallschlitze und ggf. der vorgeschwächten Bereiche in der Wandung des Turms auf der zweiten Ebene gedreht. In dieser Ausführungsform sind die resultierenden Fallrichtungen der beiden Abschnitte des Turms, die durch die erste und zweite Ebene definiert sind, also genau einander entgegengesetzt und fallen durch die Sprengung übereinander.

In einem weiteren Beispiel weist das Verfahren des Weiteren das Ausbilden von dritten Fallschlitzen auf einer dritten Ebene des Turms auf, die eine dritte Fallrichtung definieren, wobei zwischen den dritten Fallschlitzen mindestens eines in der dritten Fallrichtung liegendes und zu sprengendes drittes Vorderbein verbleibt, und wobei mindestens ein drittes Hinterbein verbleibt. Durch das Ausbilden der ersten, zweiten und dritten Fallschlitze sind die erste, zweite und dritte Fallrichtung derart bestimmt sind, dass die sich bei Sprengung der zu sprengenden Vorderbeine ergebende Kippfigur eine Faltung beschreibt, wobei diejenigen Abschnitte des Turms, die durch die Positionen der Ebenen definiert sind, übereinander gefaltet werden. Die dritte Fallrichtung kann dabei der ersten entsprechen, bzw. die erste und dritte Fallrichtung sind der zweiten Fallrichtung entgegengesetzt bzw. um die Längsachse des Turms um 180° gedreht. Die dafür notwendige Anordnung von Fallschlitzen kann dabei jener Anordnung von Fallschlitzen der ersten Ebene entsprechen.

Kippt der Turm in Form einer Faltung, so reduziert sich die zu berücksichtigende Gesamtaufpralllänge des Turms drastisch. Ist beispielsweise die erste Ebene im Bereich des Fußes des Turms und die zweite Ebene bei etwa ein Drittel der Höhe des Turms angeordnet, reduziert sich die Gesamtaufpralllänge vom etwa 1,2-fachen der Höhe des Turms auf etwa 2/3 der Höhe des Turms. Das entspricht etwa 55%.

In einer Ausführungsform des Verfahrens sind die Fallrichtungen um die Längsachse des Turms zueinander verdreht. Dies ermöglicht weitere Kippfiguren, bei denen die einzelnen Abschnitte, definiert durch die Positionen der Ebenen des Turms, nicht entgegengesetzt übereinander fallen.

Vorzugsweise ist die erste Fallrichtung der zweiten Fallrichtung entgegengesetzt. Beispielsweise fällt der erste Abschnitt des Turms, definiert durch die Positionen der Ebenen des Turms, in eine Richtung die von der Fallrichtung des zweiten Abschnitts des Turms, definiert durch die Positionen der Ebenen des Turms, um 180 ° um die Längsachse des Turms gedreht ist.

Gemäß einem weiteren Aspekt der Erfindung wird ein Turm, insbesondere der Turm einer Windenergieanlage, bereitgestellt, der entsprechend einer Ausführungsform der hierin beschriebenen Verfahren zur Sprengung vorbereitet ist.

Dementsprechend wird ein Turm bereitgestellt, der eine Wandung aufweist, wobei der Turm zur Sprengung vorbereitet ist. Der Turm weist weiterhin auf einer ersten Ebene des Turms erste ausgebildete Fallschlitze auf, die so ausgestaltet sind, dass sie eine erste Fallrichtung definieren, wobei zwischen den ersten Fallschlitzen mindestens ein in der ersten Fallrichtung liegendes und zu sprengendes erstes Vorderbein verbleibt, und wobei des Weiteren mindestens ein erstes Hinterbein verbleibt. Des Weiteren weist der Turm auf mindestens einer zweiten Ebene des Turms zweite ausgebildete Fallschlitzen auf, die so ausgestaltet sind, dass sie eine zweite Fallrichtung definieren, wobei zwischen den zweiten Fallschlitzen mindestens ein in der zweiten Fallrichtung liegendes und zu sprengendes zweites Vorderbein verbleibt, und wobei mindestens ein zweites Hinterbein verbleibt. Die erste und zweite Ebene unterscheiden sich dabei in ihren Positionen in axialer Richtung des Turms und die genannten Fallrichtungen sind so angepasst, dass sie eine Kippfigur des Turms definieren.

In einer weiteren Ausführungsform weist der Turm stabilisierende Elemente auf, die vertikal in der Wandung des Turms verlaufen. Die stabilisierenden Elemente umfassen beispielsweise eine Bewehrung, insbesondere bei einem Bauwerk aus Stahlbeton. Die stabilisierenden Elemente umfassen beispielsweise auch gespannte Stahleinlagen aus Spannstahl, insbesondere bei einem Bauwerk aus Spannbeton.

In einer bevorzugten Ausführungsform sind die stabilisierenden Elemente Spannglieder, die zum Beispiel an deren Enden eingespannt sind und eine Zugspannung in vertikaler Richtung auf die Wandung des Turms ausüben. Zwischen den Enden kann das jeweilige Spannglied vom Beton entkoppelt sein (d.h. die Wandung kann durch Spannbeton ohne Verbund ausgebildet sein).

Vorzugsweise sind die Spannelemente im Turm mit einem Spannverfahren ohne Verbund eingebracht, so dass sich die Spannelemente zwischen den Ankerstellen, an denen ihre Enden eingespannt sind, zum Beton relativ verschieben können. Beispielsweise verlaufen die vorgespannten Spannelemente in Hüllrohren; sie können mit Fett umhüllt sein. Wird ein solches von der Wandung des Turms entkoppeltes Spannglied durchtrennt, so ist es über seine gesamte Länge unwirksam.

In einer Ausführungsform sind die ausgebildeten Fallschlitze so ausgestaltet, dass mindestens ein erstes Vorderbein in Umfangsrichtung des Turms derart angeordnet ist, dass mindestens einige der vertikal verlaufenden stabilisierenden Elemente, die durch das mindestens eine zweite Hinterbein verlaufen, auch durch das mindestens eine erste Vorderbein verlaufen, und dass das mindestens eine zweite Vorderbein in Umfangsrichtung des Turms derart angeordnet ist, dass mindestens einige der vertikal verlaufenden stabilisierenden Elemente, die durch das mindestens eine erste Hinterbein verlaufen, auch durch das mindestens eine zweite Vorderbein verlaufen. Bei derartig ausgebildeten Fallschlitzen ist sichergestellt, dass der Turm auch bei Vorhandensein der Fallschlitze noch stabil ist. Insbesondere ist sichergestellt, dass zumindest einige der stabilisierenden Elemente intakt bleiben und somit die Spannung in der Wandung des Turms aufrechterhalten wird.

In einer Ausführungsform weist der Turm mindestens zwei, vorzugsweise drei Hinterbeinen auf jeder Ebene auf. Die Hinterbeine einer Ebene sind dadurch voneinander abgegrenzt, dass eine Ausnehmung in der Wandung zwischen den Hinterbeinen vorgesehen ist oder dass zwischen den Hinterbeinen angeordnete stabilisierende Element durchtrennt sind, wobei mindestens ein durch jedes Hinterbein einer Ebene verlaufendes stabilisierendes Element auf der oder den anderen Ebenen nicht durchtrennt ist, und insbesondere durch ein in der bzw. den anderen Ebenen angeordnetes Vorderbein oder Hinterbein verläuft. Dadurch ist der Turm auch im Bereich der Hinterbeine der jeweiligen Ebene vorgeschwächt, wobei die Standfestigkeit erhalten bleibt.

In einer Ausführungsform des Turms, sind die ausgebildeten Fallschlitze derart angepasst, dass für jedes Hinterbein auf der einen Ebene mindestens ein Vorderbein auf der anderen Ebene vorgesehen ist. Das Vorderbein ist derart angeordnet, dass mindestens ein durch das Hinterbein verlaufendes stabilisierendes Element auch durch das entsprechende Vorderbein auf der anderen Ebene verläuft. Pro Ebene sind vorzugweise zwei oder drei Hinterbeine vorgesehen. Werden auf mehr als zwei Ebenen des Turms Vorder- und Hinterbeine ausgebildet, sind diese bevorzugt jeweils entgegengesetzt ausgerichtet. Stabilisierende Elemente verlaufen abwechselnd durch die Hinterbeine und die Vorderbeine benachbarter Ebenen.

In einer Ausführungsform weist der Turm ferner mindestens einen Sprengsatz im Bereich der stabilisierenden Elemente auf, der zum Trennen mindestens eines der stabilisierenden Elemente beim Sprengen angeordnet und ausgestaltet ist. Bevorzugt handelt es sich bei dem mindestens einen Sprengsatz um eine Schneidladung. Dies ist eine Bauart von Sprengsatz mit besonders hoher und gezielt gerichteter Durchschlagskraft, die verwendet wird, um die stabilisierenden Elemente zu durchtrennen. Bevorzugt ist der mindestens eine Sprengsatz so ausgestaltet, dass das Trennen parallel zur Sprengung der Vorderbeine erfolgt.

Der Turm kann vorzugweise auch als Mast ausgebildet sein.

Selbstverständlich können die Merkmale der vorab beschriebenen Ausführungsformen und Aspekte der vorliegenden Erfindung miteinander kombiniert werden.

### Kurze Beschreibung der Zeichnungen

Die Erfindung wird nachfolgend unter Bezugnahme auf die beiliegenden Zeichnungen näher erläutert. In den Zeichnungen kennzeichnen gleiche Bezugszeichen gleiche oder ähnliche Elemente.
- Fig. 1: ist eine schematische Zeichnung, die einen Turm mit zwei eingebrachten vorbereiteten Sprengmäulern auf unterschiedlichen Ebenen des Turms gemäß einer Ausführungsform der vorliegenden Erfindung zeigt.
- Fig. 2: ist eine schematische Zeichnung, die den Querschnitt zweier eingebrachter vorbereiteter Sprengmäuler in die Wandung des Turms auf unterschiedlichen Ebenen des Turms gemäß einer Ausführungsform der vorliegenden Erfindung in Draufsicht zeigt.
- Fig. 3: ist eine schematische Zeichnung, die die Ausarbeitung eines Vorder- und eines Hinterbeins auf unterschiedlichen Ebenen des Turms gemäß einer Ausführungsform der vorliegenden Erfindung in Frontal- und Seitenansicht zeigt.
- Fig. 4: ist eine schematische Zeichnung, die die Ausarbeitung eines Vorderbeins und zweier Hinterbeine auf unterschiedlichen Ebenen des Turms gemäß einer Ausführungsform der vorliegenden Erfindung in Frontal- und Seitenansicht zeigt.
- Fig. 5: ist eine schematische Zeichnung, die einen Abschnitt des Querschnitts der Wandung des Turms mit freigelegtem stabilisierendem Element in der Wandung des Turms gemäß einer Ausführungsform der vorliegenden Erfindung in Draufsicht zeigt.
- Fig. 6: ist eine schematische Zeichnung, die einen Turm mit drei eingebrachten vorbereiteten Sprengmäulern auf unterschiedlichen Ebenen des Turms gemäß einer Ausführungsform der vorliegenden Erfindung in Draufsicht zeigt.
- Fig. 7: zeigt beispielhaft ein Ablaufdiagram einer Ausführungsform des Verfahrens.

### Beschreibung beispielhafter Ausführungsformen

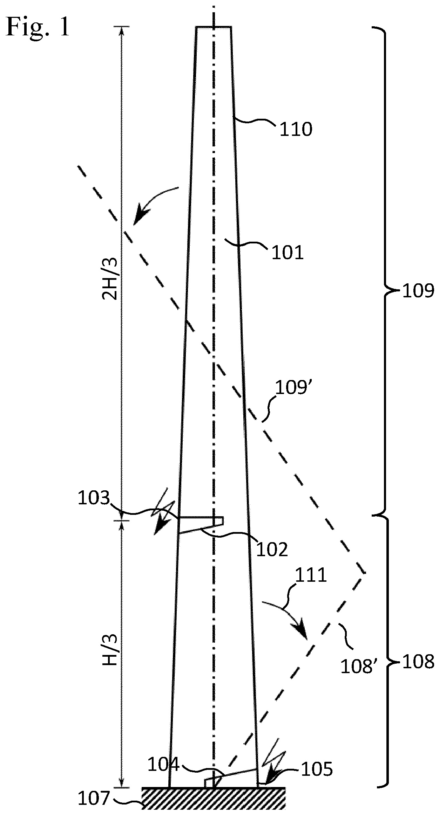

Fig. 1 zeigt beispielhaft eine Ausführungsform des erfindungsgemäßen Verfahrens. Ein Turm 101 mit einer Wandung 110 steht auf einem Fundament 107. In den Turm 101 sind auf zwei Ebenen, beispielsweise im Bereich des Fußes des Turms 101 oberhalb des Fundaments 107 und in der Höhe von einem Drittel der Gesamthöhe des Turms 101, gemessen ab dem Fundament, in die Wandung des Turms 101 Fallschlitze 102, 104 eingebracht. Ebenso befinden sich auf diesen Ebenen zu sprengende Elemente (bzw. Vorderbeine) 103, 105. Die Gesamtheit der Ausschnitte in der Wandung des Turms 101 und der zu sprengenden Elementen auf einer Ebene beschreibt ein vorbereitetes Sprengmaul. Die Anordnung der Fallschlitze jeder Ebene definiert die Fallrichtungen 110, 111 der beiden Abschnitte 108, 109 des Turms, die durch die Position der beiden Ebenen definiert sind. Die eintretende Fallbewegung nach Sprengen der zu sprengenden Elemente 103, 105, beispielsweise in Form einer Faltung der beiden Abschnitte 108, 109 übereinander, ist durch die wegekippten Abschnitte 108', 109' aufgezeigt.

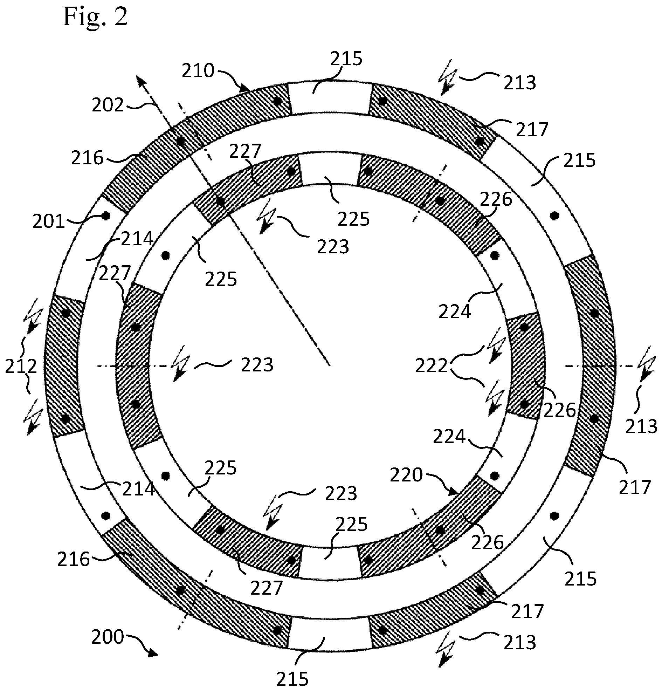

Fig. 2 zeigt für eine Ausführungsform des erfindungsgemäßen Verfahrens den Querschnitt zweier eingebrachter vorbereiteter Sprengmäuler 210, 220 in die Wandung des Turms 101 auf unterschiedlichen Ebenen in Draufsicht, wobei diese so in dem Turm 101 der Fig. 1 vorgesehen sein können.

Diese Figur zeigt beispielhaft einen Turm mit konischem Schaft. Der äußere Ring beschreibt das vorbereitete Sprengmaul 210 auf einer ersten Ebene, das unterhalb des zweiten vorbereiteten Sprengmauls 220 auf einer zweiten Ebene positioniert ist. Für jedes vorbereitete Sprengmaul werden in die Wandung Ausschnitte eingebracht. Diese können entweder Fallschlitze 215, 225, die die Fallrichtung des Turms definieren, oder schwächende Ausschnitte 214, 224 sein. Die Ausschnitte können durchgängig oder nicht durchgängig sein. Die Ausschnitte 214, 224, 215, 225 können stabilisierende Elemente 201 freilegen, die vertikal durch den Turm laufen, beispielsweise Spannglieder.

Die Spannverfahren solcher Spannglieder unterscheiden sich durch die Art der Verbundwirkung und können in Spannverfahren mit und ohne Verbund unterteilt werden. Bei einem Spannverfahren mit Verbund sind die Spannglieder als Spannlitzen ausgebildet, die kraftschlüssig mit dem Beton verbunden sind, während sich bei einem Spannverfahren ohne Verbund die Spannlitzen zwischen den Ankerstellen, an denen ihre Enden eingespannt sind, zum Beton relativ verschieben können. Die Spannlitzen können bei einer internen Vorspannung ohne Verbund zudem in Hüllrohren verlaufen und sind oft mit Fett umhüllt.

Je ein Paar der stabilisierenden Elemente in dieser Figur, die gemeinsam auf einer Geraden 202, welche vom Mittelpunkt des Querschnitts des Turms ausgehend in radiale Richtung zeigt, liegen, beschreiben das identische stabilisierende Element, das vertikal durch den Turm verläuft, auf unterschiedlicher Ebene.

Die freigelegten stabilisierenden Elemente, die für die vor der Sprengung erforderliche Standsicherheit des Turms nicht benötigt werden, werden in besonderen Ausführungsformen der Erfindung vor der Sprengung unwirksam gemacht, beispielsweise durch Durchtrennen, insbesondere durch einen Sägeschnitt.

Beispielsweise bei Türmen aus Spannbeton ohne Verbund wird ein Spannglied auf seiner gesamten Länge unwirksam, sobald es durchtrennt wird.

Die Anordnung der Fallschlitze 215, 225 und gegebenenfalls der schwächenden Ausschnitte 214, 224 in der Wandung des Turms jeder Ebene definiert die Anzahl der Hinterbeine 216, 226 und Vorderbeine 217, 227 auf jeder Ebene des Turms. In der gezeigten besonderen Ausführungsform sind drei Hinterbeine 216, 226 und drei Vorderbeine 217, 227 je Ebene ausgebildet.

Vorzugsweise werden die Vorderbeine einer Ebene relativ zu den Hinterbeinen einer anderen Ebene durch Anbringen der Ausschnitte derart angeordnet, dass für mindestens ein Vorderbein einer Ebene mindestens ein Hinterbein auf anderer Ebene verbleibt, so dass durch das zumindest eine Vorderbein zumindest einige stabilisierende Elemente verlaufen, die auch durch das mindestens eine Hinterbein verlaufen.

Zum Beispiel können alle stabilisierenden Elemente eines Vorderbeins auf einer Ebene durch ein zugehöriges Hinterbein auf anderer Ebene verlaufen. In Fig. 2 verlaufen die stabilisierenden Elemente 201 jedes der drei Hinterbeine 216 bzw. jedes der drei Vorderbeine 217 auf der ersten Ebene auch durch je drei zugehörige Vorderbeine 227 bzw. je drei zugehörige Hinterbeine 226 auf der zweiten Ebene. Die Anordnung der Beine der ersten Ebene zu den Beinen der zweiten Ebene entspricht einer Verdrehung von 180 ° um die Längsachse des Turms.

Beim Sprengen, was durch Pfeile 213 angedeutet ist, der Vorderbeine 217 der ersten Ebene kippt der erste Abschnitt des Turms über die Hinterbeine 216 in Richtung der Vorderbeine 217. Beim Sprengen, was durch Pfeile 223 angedeutet ist, der Vorderbeine 227 der zweiten Ebene kippt der zweite Abschnitt des Turms über die Hinterbeine 226 in Richtung der Vorderbeine 227. Der Turm bricht dabei an den verbliebenen Hinterbeinen jeder Ebene durch Biegung.

Bevorzugt erfolgt zeitnah oder zeitgleich zum Sprengen der Vorderbeine ein Durchtrennen verbliebener stabilisierender Elemente, was durch die Pfeile 212, 222 angedeutet ist. Bevorzugt erfolgt dies durch Schneidladungen, die nach Freilegen des stabilisierenden Elements, beispielsweise durch eine Bohrung, in die Wandung des Turms eingebracht worden sind.

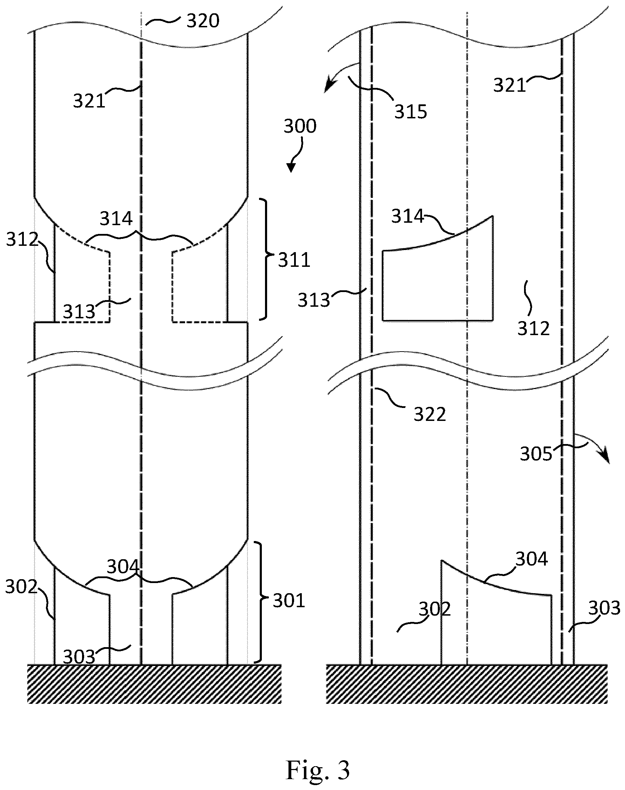

Fig. 3 zeigt für eine Ausführungsform des erfindungsgemäßen Verfahrens einen Abschnitt des Turms 300 auf einer erster Ebene 301, der für die Sprengung vorbereitet worden ist, und einen Abschnitt des Turms auf einer zweiten Ebene 311, der für die Sprengung vorbereitet worden ist. Auf beiden Ebenen ist sinngemäß nach Fig. 2 ein vorbereitetes Sprengmaul eingebracht worden. Die linke Seite dieser Figur zeigt beide Abschnitte des Turms in Frontalansicht, die rechte Seite beide Abschnitte um die Längsachse 320 des Turms um 90° gedreht. Der Turm besitzt beispielhaft eine zylindrische Form, hat aber meist eine konische Form. Die Ebenen sind in Längsrichtung des Turms in einem Bereich oberhalb des Fußes des Turms angeordnet, wobei sich der Abschnitt des Turms auf der zweiten Ebene 311 oberhalb des Abschnitts des Turms auf der ersten Ebene 301 befindet. In dieser Ausführungsform sind in der Wandung des Turms pro Ebene durch das Einbringen zweier Fallschlitze 304, 314, wobei deren Form nicht auf die dargestellte Variante festgelegt ist, pro Ebene ein Vorderbein 303, 313 und ein Hinterbein 302, 312 ausgebildet. Das entstandene Vorderbein 303, 313 jeder Ebene definiert je eine Fallrichtung 305, 315, in die die Abschnitte, die durch die Positionen der Ebenen 301, 311 definiert sind, über die Hinterbeine 302, 312 kippen. In dieser Ausführung sind die Fallrichtungen 305, 315 um die Längsachse 320 des Turms um 180 ° zueinander verdreht. Die dadurch entstehende Kippfigur beschreibt eine Faltung. Der obere Abschnitt und der untere Abschnitt des Turms, definiert durch die Positionen der Ebenen 301, 311, fallen ineinander. Der obere Abschnitt kollidiert mit dem bereits zu Boden gegangenen unteren Abschnitt. Verbleibende Hinterbeine brechen beim Kippen durch Biegung.

Die Fig. 3 zeigt ebenso beispielhaft zwei stabilisierende Elemente 321, 322, die vertikal durch den Turm verlaufen. Das erste stabilisierende Element 321 verläuft durch das Vorderbein 303 der ersten Ebene 301 und das Hinterbein 312 der zweiten Ebene 311 und das zweite stabilisierende Element 322 verläuft durch das Hinterbein 302 der ersten Ebene 301 und das Vorderbein 313 der zweiten Ebene 311.

Vorzugsweise werden stabilisierende Elemente, die durch Vorderbeine einer Ebene und auf anderer Ebene durch Hinterbeine verlaufen, zeitlich parallel zur Sprengung der Vorderbeine unwirksam gemacht, beispielsweise durch Durchtrennen, bevorzugt durch Schneidladungen.

Die Anzahl der eingebrachten Ebenen in den Turm, auf welchen Vorderbeine und Hinterbeine ausgebildet werden sind nicht auf zwei begrenzt. Vielmehr lassen sich dem Zweck dienlich eine beliebige Anzahl solcher Ebenen in Längsrichtung verteilen.

Ebenso ist der Abstand der Ebenen zueinander dem Zweck dienlich beliebig wählbar. Ebenso kann die Verdrehung der Ebenen bezüglich der Anordnung der ausgebildeten Beine, und damit der Fallrichtung, gegeneinander beliebig gewählt werden und zueinander unterschiedlich sein. Ebenso kann die Anzahl der ausgebildeten Vorder- und Hinterbeine einer Ebene unterschiedlich und zu der Anzahl der Vorder- und Hinterbeine auf einer anderen Ebene verschieden sein.

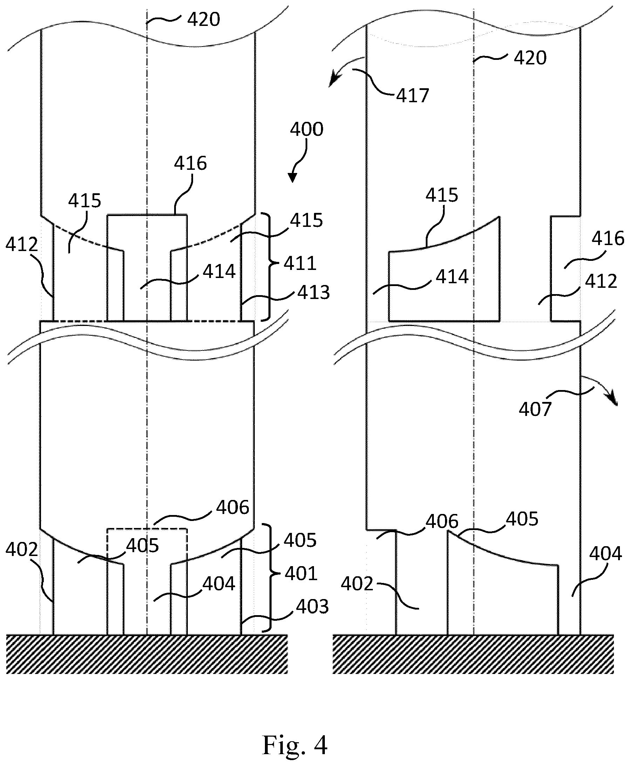

Fig. 4 zeigt für eine Ausführungsform des erfindungsgemäßen Verfahrens einen Abschnitt des Turms 400 auf einer erster Ebene 401, der für die Sprengung vorbereitet worden ist, und einen Abschnitt des Turms auf einer zweiten Ebene 411, der für die Sprengung vorbereitet worden ist. Die mit Bezug auf Figuren 1-3 vorgebrachten Erklärungen gelten sinngemäß für die Ausführungsform der Fig. 4, die bei dem Turm der Fig. 1 zum Einsatz kommen kann. Auf beiden Ebenen 401, 411 ist ein vorbereitetes Sprengmaul eingebracht worden. Die linke Seite dieser Figur zeigt beide Abschnitte des Turms in Frontalansicht, die rechte Seite beide Abschnitte um die Längsachse 420 des Turms um 90° gedreht. Der Turm besitzt beispielhaft eine zylindrische Form, hat aber meist eine konische Form. Die Ebenen sind in Längsrichtung des Turms in einem Bereich oberhalb des Fußes des Turms angeordnet, wobei sich der Abschnitt des Turms auf der zweiten Ebene 411 oberhalb des Abschnitts des Turms auf der ersten Ebene 401 befindet.

In dieser Ausführungsform sind in der Wandung des Turms pro Ebene durch das Einbringen dreier Ausschnitte, in diesem Beispiel bestehend aus zwei Fallschlitzen 405, 415 und einem schwächenden Ausschnitt 406, 416, wobei deren Form nicht auf die dargestellte Variante festgelegt ist, ein Vorderbein 404 bzw. 414 und zwei Hinterbeine 402, 403 bzw. 412, 413 ausgebildet worden.

Das entstandene Vorderbein 404, 414 jeder Ebene definiert je eine Fallrichtung 407, 417, über die Hinterbeine 402, 403, 412, 413 kippen die Abschnitte, die durch die Positionen der Ebenen 401, 411 definiert sind. In dieser Ausführung sind die Fallrichtungen 407, 417 um die Längsachse 420 des Turms um 180 ° zueinander verdreht. Die dadurch entstehende Kippfigur beschreibt eine Faltung. Der obere Abschnitt und der untere Abschnitt des Turms, definiert durch die Positionen der Ebenen 401, 411, fallen ineinander. Der obere Abschnitt kollidiert mit dem bereits zu Boden gegangenen unteren Abschnitt. Verbleibende Hinterbeine brechen beim Kippen durch Biegung.

Bei den beschriebenen Ausführungsformen können durch das Einbringen der Fallschlitze oder der schwächenden Ausschnitte stabilisierende Elemente freigelegt werden. Diese können vor dem Sprengen der Vorderbeine unwirksam gemacht werden, beispielsweise durch Durchtrennen, insbesondere durch einen Sägeschnitt.

Bei den beschriebenen Ausführungsformen der Erfindung können stabilisierende Elemente die durch Vorderbeine einer Ebene auf anderer Ebene durch Hinterbeine verlaufen zeitlich parallel zur Sprengung der Vorderbeine unwirksam gemacht werden, beispielsweise durch Durchtrennen, bevorzugt durch Schneidladungen.

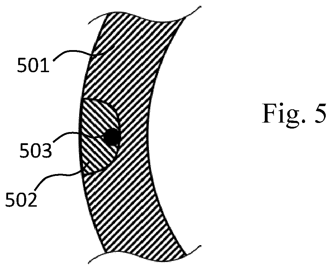

Fig. 5 zeigt in Draufsicht einen Abschnitt des Querschnitts der Wandung 501 eines Turms, wie er in den vorstehenden Figuren gezeigt worden ist, in welche gemäß einer Ausführungsform des erfindungsgemäßen Verfahrens ein nichtdurchgängiger Ausschnitt 502 eingebracht worden ist. Dieser schwächende Ausschnitt legt ein stabilisierendes Element 503, beispielsweise ein Spannglied, frei. Der geschaffene Zugang kann ermöglichen das stabilisierende Element vor dem Sprengen unwirksam zu machen, beispielsweise durch Durchtrennen, insbesondere durch einen Sägeschnitt.

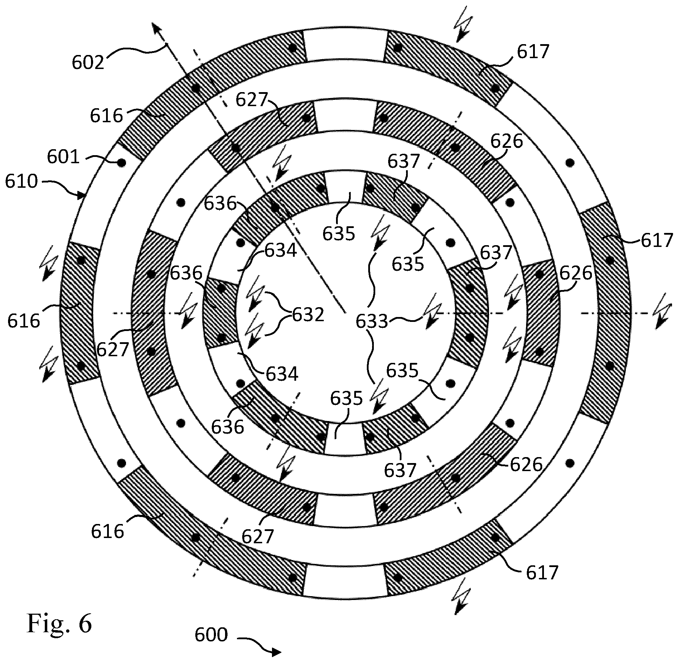

Fig. 6 zeigt für eine Ausführungsform des erfindungsgemäßen Verfahrens den Querschnitt dreier eingebrachter vorbereiteter Sprengmäuler 610, 620, 630 in die Wandung des Turms 600 auf unterschiedlichen Ebenen in Draufsicht. Die äußeren beiden eingebrachten vorbereiteten Sprengmäuler entsprechen beispielhaft der in Fig, 2 gezeigten Ausführungsform des Verfahrens, können sich jedoch auf davon verschiedenen Ebenen befinden.

Die Fig. 6 zeigt beispielhaft einen Turm mit konischem Schaft. Der äußere Ring beschreibt das vorbereitete Sprengmaul 610, das unterhalb des zweiten vorbereiteten Sprengmauls 620 positioniert ist. Der mittlere Ring beschreibt das vorbereitete Sprengmaul 620, das unterhalb des dritten vorbereiteten Sprengmauls 630 positioniert ist. Für jedes vorbereitete Sprengmaul werden in die Wandung Ausschnitte eingebracht. Diese können entweder Fallschlitze 635, die die Fallrichtung des Turms definieren, oder schwächende Ausschnitte 634 sein. Die Ausschnitte können durchgängig oder nicht durchgängig sein. Die Ausschnitte 634, 635 können stabilisierende Elemente 601 freilegen, die vertikal durch den Turm laufen, beispielsweise Spannglieder.

Je drei der stabilisierenden Elemente in dieser Figur, die gemeinsam auf einer Geraden 602, welche vom Mittelpunkt des Querschnitts des Turms ausgehend in radiale Richtung zeigt, liegen, zeigen das identische stabilisierende Element, das vertikal durch den Turm verläuft, auf unterschiedlicher Ebene.

Die freigelegten stabilisierenden Elemente, die für die Standsicherheit des Turms nicht relevant sind, können vor der Sprengung unwirksam gemacht werden, beispielsweise durch Durchtrennen, insbesondere durch einen Sägeschnitt.

In einer besonderen Ausführungsform, beispielsweise bei Türmen aus Spannbeton ohne Verbund, wird ein Spannglied auf seiner gesamten Länge unwirksam, sobald es durchtrennt wird.

Die Anordnung der Fallschlitze 635 und gegebenenfalls der schwächenden Ausschnitte 634 in der Wandung des Turms jeder Ebene definiert die Anzahl der Hinterbeine und Vorderbeine auf jeder Ebene des Turms. In der gezeigten Ausführungsform sind je drei Hinterbeine 616, 626, 636 und drei Vorderbeine 617, 627 ,637 je Ebene ausgebildet.

Auch hier werden vorzugsweise die Vorderbeine einer ersten Ebene zu den Hinterbeinen der zweiten Ebene und den Vorderbeinen der dritten Ebene durch Anbringen der Ausschnitte derart angeordnet, dass für mindestens ein Vorderbein auf der ersten Ebene mindestens ein Hinterbein auf der zweiten Ebene und mindestens ein Vorderbein auf der dritten Ebene verbleibt, so dass durch das zumindest eine Vorderbein auf der ersten Ebene zumindest einige stabilisierende Elemente verlaufen, die auch durch das mindestens eine Hinterbein auf der zweiten Ebene und das mindestens eine Vorderbein auf der dritten Ebene verlaufen. Vorzugsweise verlaufen alle stabilisierenden Elemente eines Hinterbeins auf einer Ebene durch ein Vorder- bzw. Hinterbein auf der bzw. den anderen Ebenen, so dass das stabilisierende Element nicht durchtrennt ist und seine stabilisierende Wirkung auch bei Vorbereitung des Turmes zur Sprengung beibehält.

In Fig. 6 verlaufen die stabilisierenden Elemente 601 jedes der drei Hinterbeine 616 bzw. jedes der drei Vorderbeine 617 auf der ersten Ebene durch je drei zugehörige Vorderbeine 627 bzw. je drei zugehörige Hinterbeine 626 auf zweiter Ebene und auch durch je drei zugehörige Hinterbeine 636 bzw. je drei zugehörige Vorderbeine 637 auf dritter Ebene. Die Anordnung der Beine der ersten und zweiten Ebene zueinander entspricht einer Verdrehung von 180° um die Längsachse des Turms, die Anordnung der Beine der zweiten und dritten Ebene zueinander entspricht ebenso einer Verdrehung von 180°. Die Beine der ersten und dritten Ebene sind zueinander gleich angeordnet.

Beim Sprengen der Vorderbeine 617 der ersten Ebene kippt der erste Abschnitt des Turms über die Hinterbeine 616 in Richtung der Vorderbeine 617. Beim Sprengen der Vorderbeine 627 der zweiten Ebene kippt der zweite Abschnitt des Turms über die Hinterbeine 626 in Richtung der Vorderbeine 627. Beim Sprengen, was durch Pfeile 633 angedeutet ist, der Vorderbeine 637 der dritten Ebene kippt der dritte Abschnitt des Turms über die Hinterbeine 636 in Richtung der Vorderbeine 637. Der Turm bricht dabei an den verbliebenen Hinterbeinen 616, 626, 627 jeder Ebene durch Biegung.

Bevorzugt erfolgt parallel zum Sprengen der Vorderbeine ein Durchtrennen (Pfeile 632) verbliebener stabilisierender Elemente. Bevorzugt erfolgt dies durch Schneidladungen, die nach Freilegen des stabilisierenden Elements, beispielsweise durch eine Bohrung, in die Wandung des Turms eingebracht worden sind.

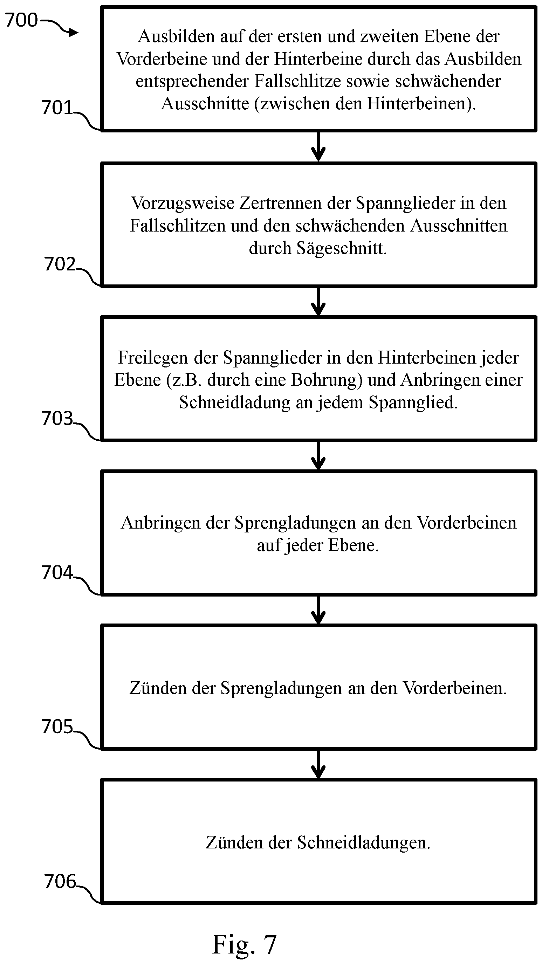

Fig. 7 zeigt beispielhaft ein Ablaufdiagram (700) einer Ausführungsform des Verfahrens. Zunächst werden auf der ersten und der zweiten Ebene die Vorderbeine und die Hinterbeine (wie z.B. in Fig. 2-4 gezeigt) durch das Ausbilden entsprechender Fallschlitze sowie schwächender Ausschnitte (zwischen den Hinterbeinen) ausgebildet (Schritt 701). Dabei werden vorzugsweise die Spannglieder in den Fallschlitzen und den schwächenden Ausschnitten durch Sägeschnitt zertrennt (Schritt 702). Die Hinterbeine und Vorderbeine der verschiedenen Ebenen sind dabei wie vorab beschriebene so angeordnet, dass die Spannglieder in diesen Beinen durchgängig sind und nicht zertrennt werden. Des Weiteren werden die Spannglieder in den Hinterbeinen jeder Ebene freigelegt (z.B. durch eine Bohrung) und eine Schneidladung an jedem Spannglied angebracht (Schritt 703). Weiterhin werden Sprengladungen an den Vorderbeinen auf jeder Ebene angebracht (Schritt 704). Der Turm ist somit zur Sprengung vorbereitet. Es erfolgt nun die Sprengung durch Zünden der Sprengladungen an den Vorderbeinen in Schritt 705 sowie durch das Zünden der Schneidladungen in Schritt 706, um die Spannglieder in den Hinterbeinen zu durchtrennen. Schritte 705 und 706 können zeitgleich oder innerhalb eines Zeitfensters (z.B. 10, 5, 2 oder 1 Sekunde) erfolgen. Der Turm wird dadurch zum Einsturz gebracht, wobei er sich in den durch die Fallschlitze vorgegebenen Fallrichtungen zusammenfaltet und dadurch eine deutlich geringere Aufprallfläche in Anspruch nimmt.

## Patentansprüche

1. Verfahren für den Rückbau eines Turms (101, 200, 300, 400, 600), wobei der Turm eine Wandung aufweist, wobei das Verfahren aufweist:
Ausbilden (701) auf einer ersten Ebene (301, 401) des Turms von ersten Fallschlitzen (104, 215, 304, 405), die eine erste Fallrichtung (110, 305, 407) definieren, wobei zwischen den ersten Fallschlitzen mindestens ein in der ersten Fallrichtung liegendes und zu sprengendes erstes Vorderbein (217, 303, 404, 617) verbleibt, und wobei des Weiteren mindestens ein erstes Hinterbein (216, 302, 402, 403, 616) verbleibt;
Ausbilden (702) auf mindestens einer zweiten Ebene (311, 411) des Turms von zweiten Fallschlitzen (102, 225, 314, 415), die eine zweite Fallrichtung (111, 315, 417) definieren, wobei zwischen den zweiten Fallschlitzen mindestens ein in der zweiten Fallrichtung liegendes und zu sprengendes zweites Vorderbein (227, 313, 414, 627) verbleibt, und wobei mindestens ein zweites Hinterbein (226, 312, 412, 413, 626) verbleibt,
wobei sich die erste und zweite Ebene in ihren Positionen in axialer Richtung des Turms unterscheiden und,
wobei die Fallrichtungen eine Kippfigur des Turms definieren.

2. Verfahren nach Anspruch 1 oder 2, wobei der Turm (101, 200, 300, 400, 600) stabilisierende Elemente (201, 321, 322, 503, 601) aufweist, die vertikal in der Wandung des Turms verlaufen, wobei insbesondere die stabilisierenden Elemente (201, 321, 322, 503, 601) Spannglieder sind, insbesondere Spannglieder, die an deren Enden eingespannt sind und eine Zugspannung in vertikaler Richtung auf die Wandung des Turms ausüben.

3. Verfahren nach Anspruch 2,
wobei das mindestens eine erste Vorderbein (217, 303, 404, 617) in Umfangsrichtung des Turms (101, 200, 300, 400, 600) derart angeordnet ist, dass mindestens einige der vertikal verlaufenden stabilisierenden Elemente, die durch das mindestens eine zweite Hinterbein (226, 312, 412, 413, 626) verlaufen, auch durch das mindestens eine erste Vorderbein verlaufen, und
wobei das mindestens eine zweite Vorderbein (227, 313, 414, 627) in Umfangsrichtung des Turms derart angeordnet ist, dass mindestens einige der vertikal verlaufenden stabilisierenden Elemente, die durch das mindestens eine erste Hinterbein (216, 302, 402, 403, 616) verlaufen, auch durch das mindestens eine zweite Vorderbein verlaufen.

4. Verfahren nach einem der Ansprüche 2 oder 3, wobei das Verfahren das Vorsehen von mindestens zwei, vorzugsweise drei Hinterbeinen (216, 302, 402, 403, 616, 226, 312, 412, 413, 626) auf jeder Ebene aufweist, wobei die Hinterbeine einer Ebene dadurch voneinander abgegrenzt sind, dass eine Ausnehmung in der Wandung zwischen den Hinterbeinen vorgesehen ist oder dass zwischen den Hinterbeinen angeordnete stabilisierende Elemente (201, 321, 322, 503, 601) durchtrennt sind, wobei mindestens ein durch jedes Hinterbein einer Ebene verlaufendes stabilisierendes Element auf der oder den anderen Ebenen nicht durchtrennt ist, und insbesondere durch ein in der bzw. den anderen Ebenen angeordnetes Vorderbein (217, 303, 404, 617, 227, 313, 414, 627) oder Hinterbein verläuft.

5. Verfahren nach einem der Ansprüche 2-4 wobei die Fallschlitze derart ausgebildet werden, dass für jedes Hinterbein (216, 302, 402, 403, 616, 226, 312, 412, 413, 626) auf der einen Ebene mindestens ein Vorderbein (217, 303, 404, 617, 227, 313, 414, 627) auf der anderen Ebene vorgesehen ist, das derart angeordnet ist, dass mindestens ein durch das Hinterbein verlaufendes stabilisierendes Element (201, 321, 322, 503, 601) auch durch das entsprechende Vorderbein auf der anderen Ebene verläuft, wobei pro Ebene vorzugweise zwei oder drei Hinterbeine vorgesehen sind.

6. Verfahren nach einem der vorstehenden Ansprüche, wobei das Verfahren des Weiteren das Sprengen des mindestens einen ersten Vorderbeines (217, 303, 404, 617) und des mindestens einen zweiten Vorderbeines (227, 313, 414, 627) aufweist, um den Turm (101, 200, 300, 400, 600) zum Einsturz zu bringen.

7. Verfahren nach einem der vorstehenden Ansprüche, wobei sich die erste Ebene (301, 401) im Bereich eines Turmfußes oberhalb eines Fundaments (107) des Turms (101, 200, 300, 400, 600) befindet, und wobei sich die zweite Ebene (311, 411) oberhalb der ersten Ebene befindet, vorzugsweise in einer unteren Hälfte des Turms, besonders bevorzugt in einem Bereich um ein Drittel der Höhe des Turms über dem Fundament.

8. Verfahren nach einem der vorstehenden Ansprüche, wobei durch das Ausbilden der ersten und der zweiten Fallschlitze (104, 215, 304, 405, 102, 225, 314, 415) die erste bzw. zweite Fallrichtung (110, 305, 407, 111, 315, 417) derart bestimmt sind, dass die sich bei Sprengung der zu sprengenden Vorderbeine (217, 303, 404, 617, 227, 313, 414, 627) ergebende Kippfigur eine Faltung beschreibt, wobei diejenigen Abschnitte (108, 109) des Turms, die durch die Positionen der Ebenen (301, 401, 311, 411) definiert sind, übereinander gefaltet werden.

9. Verfahren nach einem der vorstehenden Ansprüche, wobei die Fallrichtungen um die Längsachse (320, 420) des Turms (101, 200, 300, 400, 600) zueinander verdreht sind, wobei die erste Fallrichtung (110, 305, 407) vorzugsweise der zweiten Fallrichtung (111, 315, 417) entgegengesetzt ist.

10. Turm, der eine Wandung aufweist, wobei der Turm (101, 200, 300, 400, 600) zur Sprengung vorbereitet ist und weiterhin aufweist:
auf einer ersten Ebene (301, 401) des Turms erste ausgebildete Fallschlitze (104, 215, 304, 405), die so ausgestaltet sind, dass sie eine erste Fallrichtung (110, 305, 407) definieren, wobei zwischen den ersten Fallschlitzen mindestens ein in der ersten Fallrichtung liegendes und zu sprengendes erstes Vorderbein (217, 303, 404, 617) verbleibt, und wobei des Weiteren mindestens ein erstes Hinterbein (216, 302, 402, 403, 616) verbleibt;
auf mindestens einer zweiten Ebene (311, 411) des Turms zweite ausgebildete Fallschlitze (102, 225, 314, 415), die so ausgestaltet sind, dass sie eine zweite Fallrichtung (111, 315, 417) definieren, wobei zwischen den zweiten Fallschlitzen mindestens ein in der zweiten Fallrichtung liegendes und zu sprengendes zweites Vorderbein (227, 313, 414, 627) verbleibt, und wobei mindestens ein zweites Hinterbein (226, 312, 412, 413, 626) verbleibt,
wobei sich die erste und zweite Ebene in ihren Positionen in axialer Richtung des Turms unterscheiden und,
wobei die Fallrichtungen so angepasst sind, dass sie eine Kippfigur des Turms definieren.

11. Turm nach Anspruch 10, wobei der Turm (101, 200, 300, 400, 600) stabilisierende Elemente (201, 321, 322, 503, 601) aufweist, die vertikal in der Wandung des Turms verlaufen, wobei insbesondere die stabilisierenden Elemente (201, 321, 322, 503, 601) Spannglieder sind, insbesondere Spannglieder, die an deren Enden eingespannt sind und eine Zugspannung in vertikaler Richtung auf die Wandung des Turms ausüben.

12. Turm nach Anspruch 11,
wobei das mindestens eine erste Vorderbein (217, 303, 404, 617) in Umfangsrichtung des Turms (101, 200, 300, 400, 600) derart angeordnet ist, dass mindestens einige der vertikal verlaufenden stabilisierenden Elemente, die durch das mindestens eine zweite Hinterbein (226, 312, 412, 413, 626) verlaufen, auch durch das mindestens eine erste Vorderbein verlaufen, und
wobei das mindestens eine zweite Vorderbein (227, 313, 414, 627) in Umfangsrichtung des Turms derart angeordnet ist, dass mindestens einige der vertikal verlaufenden stabilisierenden Elemente, die durch das mindestens eine erste Hinterbein (216, 302, 402, 403, 616) verlaufen, auch durch das mindestens eine zweite Vorderbein verlaufen.

13. Turm nach Anspruch 11 oder 12, wobei der Turm mindestens zwei, vorzugsweise drei Hinterbeine (216, 302, 402, 403, 616, 226, 312, 412, 413, 626) auf jeder Ebene aufweist, wobei die Hinterbeine einer Ebene dadurch voneinander abgegrenzt sind, dass eine Ausnehmung in der Wandung zwischen den Hinterbeinen vorgesehen ist oder dass zwischen den Hinterbeinen angeordnete stabilisierende Elemente (201, 321, 322, 503, 601) durchtrennt sind, wobei mindestens ein durch jedes Hinterbein einer Ebene verlaufendes stabilisierendes Element auf der oder den anderen Ebenen nicht durchtrennt ist, und insbesondere durch ein in der bzw. den anderen Ebenen angeordnetes Vorderbein (217, 303, 404, 617, 227, 313, 414, 627) oder Hinterbein verläuft.

14. Turm nach einem der Ansprüche 11-13, wobei die Fallschlitze derart angepasst sind, dass für jedes Hinterbein (216, 302, 402, 403, 616, 226, 312, 412, 413, 626) auf der einen Ebene mindestens ein Vorderbein (217, 303, 404, 617, 227, 313, 414, 627) auf der anderen Ebene vorgesehen ist, das derart angeordnet ist, dass mindestens ein durch das Hinterbein verlaufendes stabilisierendes Element (201, 321, 322, 503, 601) auch durch das entsprechende Vorderbein auf der anderen Ebene verläuft, wobei pro Ebene vorzugweise zwei oder drei Hinterbeine vorgesehen sind.

15. Turm, nach einem der Ansprüche 11-14, wobei der Turm mindestens einen Sprengsatz aufweist, der im Bereich der stabilisierenden Elemente so angeordnet und ausgestaltet ist, dass er beim Sprengen mindestens ein stabilisierendes Element durchtrennt, wobei es sich bei dem mindestens einen Sprengsatz bevorzugt um eine Schneidladung handelt.

## Claims

1. Method for dismantling a tower (101, 200, 300, 400, 600), the tower comprising a wall, wherein the method comprises:
forming (701) on a first plane (301, 401) of the tower first fall slits (104, 215, 304, 405) defining a first fall direction (110, 305, 407), wherein at least one first front leg (217, 303, 404, 617) lying in the first fall direction and to be detonated remains between the first fall slits, and wherein further at least one first rear leg (216, 302, 402, 403, 616) remains,
forming (702) on at least a second plane (311, 411) of the tower second fall slits (102, 225, 314, 415) defining a second fall direction (111, 315, 417), wherein at least one second front leg (227, 313, 414, 627) lying in the second fall direction and to be detonated remains between the second fall slits, and wherein at least one second rear leg (226, 312, 412, 413, 626) remains,
wherein the first and second planes differ in their positions in the axial direction of the tower, and
wherein the fall directions define a tilt figure of the tower.

2. Method according to claim 1 or 2, wherein the tower (101, 200, 300, 400, 600) comprises stabilizing elements (201, 321, 322, 503, 601) which extend vertically in the wall of the tower, wherein in particular the stabilizing elements (201, 321, 322, 503, 601) are tendons, in particular tendons which are clamped at their ends and which exert a tensile stress in vertical direction on the wall of the tower.

3. Method according to claim 2,
wherein the at least one first front leg (217, 303, 404, 617) is arranged in the circumferential direction of the tower (101, 200, 300, 400, 600) such that at least some of the vertically extending stabilizing elements which extend through the at least one second rear leg (226, 312, 412, 413, 626) also extend through the at least one first front leg, and
wherein the at least one second front leg (227, 313, 414, 627) is arranged in the circumferential direction of the tower such that at least some of the vertically extending stabilizing elements which extend through the at least one first rear leg (216, 302, 402, 403, 616) also extend through the at least one second front leg.

4. A method according to any one of claims 2 or 3, the method comprising providing at least two, preferably three, rear legs (216, 302, 402, 403, 616, 226, 312, 412, 413, 626) on each plane, wherein the rear legs of a plane are separated from each other in that a recess is provided in the wall between the rear legs or in that stabilizing elements (201, 321, 322, 503, 601) arranged between the rear legs are cut through, wherein at least one stabilizing element extending through each rear leg of a plane is not cut through on the other plane or planes, and in particular extends through a front leg (217, 303, 404, 617, 227, 313, 414, 627) or rear leg arranged in the other plane or planes.

5. Method according to any one of claims 2-4 wherein the fall slits are adapted such that for each rear leg (216, 302, 402, 403, 616, 226, 312, 412, 413, 626) on one plane at least one front leg (217, 303, 404, 617, 227, 313, 414, 627) on the other plane is provided, which is arranged such that at least one stabilizing element (201, 321, 322, 503, 601) extending through the rear leg also extends through the corresponding front leg on the other plane, wherein two or three rear legs are preferably provided per plane.

6. Method according to any one of the preceding claims, wherein the method further comprises detonating the at least one first front leg (217, 303, 404, 617) and the at least one second front leg (227, 313, 414, 627) to cause the tower (101, 200, 300, 400, 600) to collapse.

7. Method according to any one of the preceding claims, wherein the first plane (301, 401) is located in the area of a tower base above a foundation (107) of the tower (101, 200, 300, 400, 600), and wherein the second plane (311, 411) is located above the first plane, preferably in a lower half of the tower, more preferably in a range around one third of the height of the tower above the foundation.

8. Method a method according to any one of the preceding claims, wherein, by forming the first and second fall slits (104, 215, 304, 405, 102, 225, 314, 415), the first and second fall directions (110, 305, 407, 111, 315, 417) respectively are determined such that the tilt figure resulting from the detonation of the front legs (217, 303, 404, 617, 227, 313, 414, 627) to be detonated describes a folding, wherein those sections (108, 109) of the tower defined by the positions of the planes (301, 401, 311, 411) are folded over one another.

9. Method according to any one of the preceding claims, wherein the fall directions are rotated relative to each other about the longitudinal axis (320, 420) of the tower (101, 200, 300, 400, 600), wherein the first fall direction (110, 305, 407) is preferably opposite to the second fall direction (111, 315, 417).

10. Tower comprising a wall, the tower (101, 200, 300, 400, 600) being prepared for detonation and further comprising:
on a first plane (301, 401) of the tower, first formed fall slits (104, 215, 304, 405) configured to define a first fall direction (110, 305, 407), wherein at least one first front leg (217, 303, 404, 617) lying in the first fall direction and to be detonated remains between the first fall slits, and wherein further at least one first rear leg (216, 302, 402, 403, 616) remains,
on at least second plane (311, 411) of the tower, second formed fall slits (102, 225, 314, 415) configured to define a second fall direction (111, 315, 417), wherein at least one second front leg (227, 313, 414, 627) lying in the second fall direction and to be detonated remains between the second fall slits, and wherein at least one second rear leg (226, 312, 412, 413, 626) remains,
wherein the first and second planes differ in their positions in the axial direction of the tower, and,
wherein the fall directions are adapted to define a tilt figure of the tower.

11. Tower according to claim 10, wherein the tower (101, 200, 300, 400, 600) comprises stabilizing elements (201, 321, 322, 503, 601) which extend vertically in the wall of the tower, wherein in particular the stabilizing elements (201, 321, 322, 503, 601) are tendons, in particular tendons which are clamped at their ends and which exert a tensile stress in vertical direction on the wall of the tower.

12. Tower according to claim 11,
wherein the at least one first front leg (217, 303, 404, 617) is arranged in the circumferential direction of the tower (101, 200, 300, 400, 600) such that at least some of the vertically extending stabilizing elements which extend through the at least one second rear leg (226, 312, 412, 413, 626) also extend through the at least one first front leg, and
wherein the at least one second front leg (227, 313, 414, 627) is arranged in the circumferential direction of the tower such that at least some of the vertically extending stabilizing elements which extend through the at least one first rear leg (216, 302, 402, 403, 616) also extend through the at least one second front leg.

13. A tower according to claim 11 or 12, wherein the tower comprises at least two, preferably three, rear legs (216, 302, 402, 403, 616, 226, 312, 412, 413, 626) on each plane, wherein the rear legs of a plane are separated from each other in that a recess is provided in the wall between the rear legs or in that stabilizing elements (201, 321, 322, 503, 601) arranged between the rear legs are cut through, wherein at least one stabilizing element extending through each rear leg of a plane is not cut through on the other plane or planes, and in particular extends through a front leg (217, 303, 404, 617, 227, 313, 414, 627) or rear leg arranged in the other plane or planes.

14. Tower according to any one of claims 11-13, wherein the fall slits are adapted such that for each rear leg (216, 302, 402, 403, 616, 226, 312, 412, 413, 626) on one plane at least one front leg (217, 303, 404, 617, 227, 313, 414, 627) on the other plane is provided, which is arranged such that at least one stabilizing element (201, 321, 322, 503, 601) extending through the rear leg also extends through the corresponding front leg on the other plane, wherein two or three rear legs are preferably provided per plane.

15. Tower, according to any one of claims 11-14, wherein the tower comprises at least one explosive charge arranged and configured in the region of the stabilizing elements such that, when detonated, it cuts through at least one stabilizing element, wherein the at least one explosive charge is preferably a cutting charge.

## Revendications

1. Procédé servant à démanteler une tour (101, 200, 300, 400, 600), la tour présentant une paroi, le procédé comportant les étapes suivantes :
configuration (701) de premières fentes de chute (104, 215, 304, 405) dans un premier plan (301, 401) de la tour, celles-ci définissant un premier sens de chute (110, 305, 407), au moins une première patte avant (217, 303, 404, 617) prévue pour être détruite par explosion subsistant entre les premières fentes de chute qui s'étend dans le premier sens de chute, au moins une première patte arrière (216, 302, 402, 403, 616) subsistant par ailleurs ;
configuration (702) de deuxièmes fentes de chute (102, 225, 314, 415) dans au moins un deuxième plan (311, 411) de la tour, celles-ci définissant un deuxième sens de chute (111, 315, 417), au moins une deuxième patte avant (227, 313, 414, 627) prévue pour être détruite par explosion subsistant entre les deuxièmes fentes de chute qui s'étend dans le deuxième sens de chute, au moins une deuxième patte arrière (226, 312, 412, 413, 626) subsistant,
les premier et deuxième plans différant quant à leurs positions en direction axiale de la tour et
les sens de chute définissant une silhouette de basculement de la tour.

2. Procédé selon la revendication 1 ou 2, dans lequel la tour (101, 200, 300, 400, 600) présente des éléments stabilisateurs (201, 321, 322, 503, 601) s'étendant verticalement dans la paroi de la tour, les éléments stabilisateurs (201, 321, 322, 503, 601) étant notamment des éléments de serrage, notamment des éléments de serrage serrés à leurs extrémités en exerçant une contrainte de traction sur la paroi de la tour en direction verticale.

3. Procédé selon la revendication 2, dans lequel l'au moins une première patte avant (217, 303, 404, 617) est disposée, en direction circonférentielle de la tour (101, 200, 300, 400, 600), de sorte qu'au moins quelques-uns des éléments stabilisateurs s'étendant verticalement et traversant l'au moins une deuxième patte arrière (226, 312, 412, 413, 626) passent également par l'au moins une première patte avant, et l'au moins une deuxième patte avant (227, 313, 414, 627) est disposée, en direction circonférentielle de la tour, de sorte qu'au moins quelques-uns des éléments stabilisateurs s'étendant verticalement et passant par l'au moins une première patte arrière (216, 302, 402, 403, 616) passent également par l'au moins une deuxième patte avant.

4. Procédé selon l'une des revendications 2 ou 3, dans lequel le procédé comprend l'agencement d'au moins deux, de préférence trois pattes arrière (216, 302, 402, 403, 616, 226, 312, 412, 413, 626) dans chaque plan, les pattes arrière d'un plan étant délimitées les unes par rapport aux autres par le fait qu'un évidement est prévu dans la paroi entre les pattes arrière ou par le fait que des éléments stabilisateurs (201, 321, 322, 503, 601) disposés entre les pattes arrière sont découpés, au moins un élément stabilisateur d'un plan passant par chaque patte arrière n'étant pas découpé sur l'autre ou les autres plan(s), et passant notamment par une patte avant (217, 303, 404, 617, 227, 313, 414, 627) ou une patte arrière disposée dans l'autre ou les autres plan(s).

5. Procédé selon l'une des revendications 2 à 4, dans lequel les fentes de chute sont conformées de manière que pour chaque patte arrière (216, 302, 402, 403, 616, 226, 312, 412, 413, 626) disposée dans l'un des plans, au moins une patte avant (217, 303, 404, 617, 227, 313, 414, 627) est prévue dans l'autre plan et agencée de manière qu'au moins un élément stabilisateur (201, 321, 322, 503, 601) passant par la patte arrière passe également par la patte avant correspondante dans l'autre plan, deux ou trois pattes arrière étant de préférence prévues par plan.

6. Procédé selon l'une des revendications précédentes, dans lequel le procédé comporte par ailleurs la destruction par explosion de l'au moins une première patte avant (217, 303, 404, 617) et de l'au moins une deuxième patte avant (227, 313, 414, 627) pour que la tour (101, 200, 300, 400, 600) s'écroule.

7. Procédé selon l'une des revendications précédentes, dans lequel le premier plan (301, 401) est disposé dans la zone d'un pied de tour au-dessus d'un fondement (107) de la tour (101, 200, 300, 400, 600) et dans lequel le deuxième plan (311, 411) est disposé au-dessus du premier plan, de préférence dans une moitié inférieure de la tour, de manière particulièrement préférée dans une zone autour d'un tiers de la hauteur de la tour au-dessus du fondement.

8. Procédé selon l'une des revendications précédentes, dans lequel la configuration des première et deuxième fentes de chute (104, 215, 304, 405, 102, 225, 314, 415) détermine les première et deuxième sens de chute de telle sorte que la silhouette de basculement résultant de la destruction des pattes avant par explosion (217, 303, 404, 617, 227, 313, 414, 627) à être détruites par explosion décrit un pliage, les sections (108, 109) de la tour définies par les positions des plans (301, 401, 311, 411) étant repliées les unes sur les autres.

9. Procédé selon l'une des revendications précédentes, dans lequel les sens de chute autour de l'axe longitudinal (320, 420) de la tour (101, 200, 300, 400, 600) sont inversés l'un par rapport à l'autre, le premier sens de chute (110, 305, 407) étant de préférence opposé au deuxième sens de chute (111, 315, 417).

10. Tour présentant une paroi, la tour (101, 200, 300, 400, 600) étant préparée à son écroulement par explosion et comportant par ailleurs :
des premières fentes de chute (104, 215, 304, 405) dans un premier plan (301, 401) de la tour, celles-ci étant conçues pour définir un premier sens de chute (110, 305, 407), au moins une première patte avant (217, 303, 404, 617) prévue d'être détruite par explosion subsistant entre les premières fentes de chute qui s'étend dans le premier sens de chute, au moins une première patte arrière (216, 302, 402, 403, 616) subsistant par ailleurs ;
des deuxièmes fentes de chute (102, 225, 314, 415) dans au moins un deuxième plan (311, 411) de la tour, celles-ci étant conçues pour définir un deuxième sens de chute (111, 315, 417), au moins une deuxième patte avant (227, 313, 414, 627) prévue pour être détruite par explosion subsistant entre les deuxièmes fentes de chute qui s'étend dans le deuxième sens de chute, au moins une deuxième patte arrière (226, 312, 412, 413, 626) subsistant,
les premier et deuxième plans différant quant à leurs positions en direction axiale de la tour et
les sens de chute étant adaptés de manière à définir une silhouette de basculement de la tour.

11. Tour selon la revendication 10, dans laquelle la tour (101, 200, 300, 400, 600) présente des éléments stabilisateurs (201, 321, 322, 503, 601) s'étendant verticalement dans la paroi de la tour, les éléments stabilisateurs (201, 321, 322, 503, 601) étant notamment des éléments de serrage, notamment des éléments de serrage serrés à leurs extrémités en exerçant une contrainte de traction sur la paroi de la tour en direction verticale.

12. Tour selon la revendication 11, dans laquelle l'au moins une première patte avant (217, 303, 404, 617) est disposée, en direction circonférentielle de la tour (101, 200, 300, 400, 600), de sorte qu'au moins quelques-uns des éléments stabilisateurs s'étendant verticalement et traversant l'au moins une deuxième patte arrière (226, 312, 412, 413, 626) passent également par l'au moins une première patte avant, et l'au moins une deuxième patte avant (227, 313, 414, 627) est disposée, en direction circonférentielle de la tour, de sorte qu'au moins quelques-uns des éléments stabilisateurs s'étendant verticalement et passant par l'au moins une première patte arrière (216, 302, 402, 403, 616) passent également par l'au moins une deuxième patte avant.

13. Tour selon la revendication 11 ou 12, dans laquelle la tour comporte au moins deux, de préférence trois pattes arrière (216, 302, 402, 403, 616, 226, 312, 412, 413, 626) dans chaque plan, les pattes arrière d'un plan étant délimitées les unes par rapport aux autres par le fait qu'un évidement est prévu dans la paroi entre les pattes arrière ou par le fait que des éléments stabilisateurs (201, 321, 322, 503, 601) disposés entre les pattes arrière sont découpés, au moins un élément stabilisateur d'un plan passant par chaque patte arrière n'étant pas découpé sur l'autre ou les autres plan(s), et passant notamment par une patte avant (217, 303, 404, 617, 227, 313, 414, 627) ou une patte arrière disposée dans l'autre ou les autres plan(s).

14. Tour selon l'une des revendications 11 à 13, dans laquelle les fentes de chute sont conformées de manière que pour chaque patte arrière (216, 302, 402, 403, 616, 226, 312, 412, 413, 626) disposée dans l'un des plans, au moins une patte avant (217, 303, 404, 617, 227, 313, 414, 627) est prévue dans l'autre plan et agencée de manière qu'au moins un élément stabilisateur (201, 321, 322, 503, 601) passant par la patte arrière passe également par la patte avant correspondante dans l'autre plan, deux ou trois pattes arrière étant de préférence prévues par plan.

15. Tour selon l'une des revendications 11 à 14, dans laquelle la tour comporte au moins une charge explosive agencée au droit des éléments stabilisateurs et conçue de manière à découper, lors de sa destruction par explosion, au moins un élément stabilisateur, l'au moins une charge explosive étant de préférence une charge explosive à découpage.
